(19) Europäisches Patentamt / European Patent Office / Office européen des brevets

(11) **EP 4 404 647 A1**

(12) **EUROPEAN PATENT APPLICATION**
published in accordance with Art. 153(4) EPC

(43) Date of publication:
**24.07.2024 Bulletin 2024/30**

(21) Application number: **22869430.3**

(22) Date of filing: **16.09.2022**

(51) International Patent Classification (IPC):
**H04W 56/00** (2009.01)

(52) Cooperative Patent Classification (CPC):
**H04W 24/08; H04W 56/00**

(86) International application number:
**PCT/CN2022/119417**

(87) International publication number:
**WO 2023/041064 (23.03.2023 Gazette 2023/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.09.2021 CN 202111101485**

(71) Applicant: **ZTE Corporation
Shenzhen, Guangdong 518057 (CN)**

(72) Inventors:
• **BI, Feng**
  **Shenzhen, Guangdong 518057 (CN)**
• **XING, Weimin**
  **Shenzhen, Guangdong 518057 (CN)**
• **LU, Youxiong**
  **Shenzhen, Guangdong 518057 (CN)**
• **MIAO, Ting**
  **Shenzhen, Guangdong 518057 (CN)**
• **CHEN, Jie**
  **Shenzhen, Guangdong 518057 (CN)**

(74) Representative: **Iannone, Carlo Luigi et al
Barzanò & Zanardo Milano S.p.A.
Via Borgonuovo, 10
20121 Milano (IT)**

(54) **TIME PARAMETER DETERMINATION METHOD, DEVICE, AND STORAGE MEDIUM**

(57) Provided are a time parameter determination method, a device, and a storage medium. The method includes receiving a time offset index configured by a second communication node and determining the time offset according to the time offset index.

FIG. 5

**Description**

TECHNICAL FIELD

The present application relates to the field of communications, in particular, a time parameter determination method, a device, and a storage medium.

BACKGROUND

In the New Radio (NR) system, the network is deployed through Integrated Access and Backhaul (IAB) technology, which greatly reduces network deployment costs. In the practical communication process, a simultaneous uplink and downlink reception mode may be used to maintain network synchronization and reduce mutual interference between nodes. However, when the simultaneous uplink and downlink reception mode is used, how to determine the time offset relative to timing advance is an urgent problem to be resolved.

SUMMARY

Embodiments of the present application provide a time parameter determination method. The method is applied to a first communication node and includes the operations below.

In the case where mobile terminal transmit timing of the first communication node corresponds to a first timing mode, the first communication node determines the mobile terminal transmit timing of the first communication node based on a timing advance of $T_{TA}$ before mobile terminal receive timing of the first communication node.

In the case where mobile terminal transmit timing of the first communication node corresponds to a second timing mode, the first communication node determines the mobile terminal transmit timing of the first communication node based on a timing advance of $T_{TA} + N_{offset} \cdot T_c$ before mobile terminal receive timing of the first communication node.

In the case where mobile terminal transmit timing of the first communication node corresponds to a third timing mode, the first communication node determines the mobile terminal transmit timing of the first communication node based on distribution unit transmit timing of the first communication node.

$T_{TA}$ denotes a timing advance.

$N_{offset}$ denotes a time offset.

$T_c$ denotes a time unit. $T_c = 1/(\Delta f_{max} \cdot N_f)$, $\Delta f_{max} = 480 \cdot 10^3$ $Hz$, and $F_f = 4096$.

Embodiments of the present application provide a time parameter determination method. The method is applied to a second communication node and includes the operations below.

A time offset index is configured.

The time offset index is sent to a first communication node so that the first communication node determines the time offset according to the time offset index.

Embodiments of the present application provide a communication device. The communication device includes a communication module, a memory, and one or more processors.

The communication module is configured to perform communication interaction between a first communication node, a second communication node, and a donor node.

The memory is configured to store one or more programs.

When executed by the one or more processors, the one or more programs cause the one or more processors to perform the method of any one of the preceding embodiments.

Embodiments of the present application provide a storage medium. The storage medium stores a computer program which, when executed by a processor, performs the method of any one of the preceding embodiments.

BRIEF DESCRIPTION OF DRAWINGS

FIG. 1 is a display diagram of a first timing mode according to an embodiment of the present application.

FIG. 2 is another display diagram of a first timing mode according to an embodiment of the present application.

FIG. 3 is a display diagram of a second timing mode according to an embodiment of the present application.

FIG. 4 is a display diagram of a third timing mode according to an embodiment of the present application.

FIG. 5 is a flowchart of a time parameter determination method according to an embodiment of the present application.

FIG. 6 is a flowchart of another time parameter determination method according to an embodiment of the present application.

FIG. 7 is a diagram illustrating the configuration of a MAC CE according to an embodiment of the present application.

FIG. 8 is another diagram illustrating the configuration of a MAC CE according to an embodiment of the present application.

FIG. 9 is another diagram illustrating the configuration of a MAC CE according to an embodiment of the present application.

FIG. 10 is another diagram illustrating the configuration of a MAC CE according to an embodiment of the present application.

FIG. 11 is another diagram illustrating the configuration of a MAC CE according to an embodiment of the present application.

FIG. 12 is a block diagram illustrating the structure of a time parameter determination apparatus according to an embodiment of the present application.

FIG. 13 is a block diagram illustrating the structure of another time parameter determination apparatus according to an embodiment of the present application.

FIG. 14 is a diagram illustrating the structure of a communication device according to an embodiment of the present application.

DETAILED DESCRIPTION

Embodiments of the present application are described below in conjunction with drawings. The present application is described below in conjunction with accompanying drawings of the embodiments. The examples given are only used to explain the present application and are not intended to limit the scope of the present application.

With the continuous advancement of radio technologies, various radio services are flourishing. However, spectrum resources on which the radio services rely are limited. In the face of the increasing demand for bandwidth, spectrum resources ranging from 300 MHz to 3 GHz, which are adopted for commercial communication in the related art, are in extreme shortage and cannot satisfy the requirements of future wireless communication. In new-generation wireless communication systems (such as NR (also referred to as a 5G system) or a new-generation wireless communication system after 5G), a higher carrier frequency such as 28 GHz, 45 GHz, or 70 GHz than that in the 4th-generation mobile communication (4G) system is adopted for communication. Such a high-frequency channel has the defects of having a larger free-propagation loss, being easily absorbed by oxygen, and being greatly affected by rain attenuation, thus seriously affecting the coverage performance of a high-frequency communication system. However, a carrier frequency corresponding to such high-frequency communication has a shorter wavelength, ensuring that more antenna elements can be accommodated per unit area. The arrangement of more antenna elements means that the beamforming method can be used to increase antenna gains, ensuring the coverage performance of high-frequency communication.

As a dense cell has become an increasingly important application scenario, the dense cell requires more network deployment cost. The introduction of wireless backhaul transmission can make network deployment easier and greatly reduce the network deployment cost. In addition, since the NR system includes a high-frequency band, the physical characteristics of the high-frequency carrier determine that it is a huge challenge to achieve wide-area coverage of the high-frequency carrier. Wireless backhaul transmission may also solve this problem. Based on the preceding requirements, IAB has been explained in the NR system. For ease of description, the link between an IAB node and a parent node is called a backhaul link (BL), and the link between an IAB node and a child node or the link between an IAB node and user equipment is called an access link (AL). The parent node may be a DN (donor node, including Donor gNB). Meanwhile, to overcome the problem of transmit-receive self-interference caused by the half-duplex relay node in the in-band scenario, the following multiplexing modes between BL and AL are proposed: time division multiplexing (TDM), frequency division multiplexing (FDM), and spatial division multiplexing (SDM). TDM indicates that different time resources are used between BL and AL. SDM indicates that different beam resources are used between BL and AL. FDM indicates that different frequency resources are used between BL and AL. Two functions are defined for a relay node (RN, also called IAB-node), namely, IAB-MT and IAB-DU. IAB-MT communicates with an upstream node. IAB-DU communicates with a downstream node (the downstream node includes a downstream terminal).

In the embodiment of the present application, an upper-level upstream node of the IAB node (denoted as IAB-node) is also referred to as a parent node (denoted as parent-node) of the IAB-node. The parent-node may be considered as a serving cell of the IAB-node. A next-level downstream node of the IAB-node is also referred to as a child-node or UE of the IAB-node. The IAB-node may be considered as a serving cell of the child-node or the UE. That is, from the perspective of the relative relationship between nodes, the IAB-node may be considered as the child-node of IAB-node's parent-node, and IAB-node may also be considered as the parent-node of IAB-node's child-node.

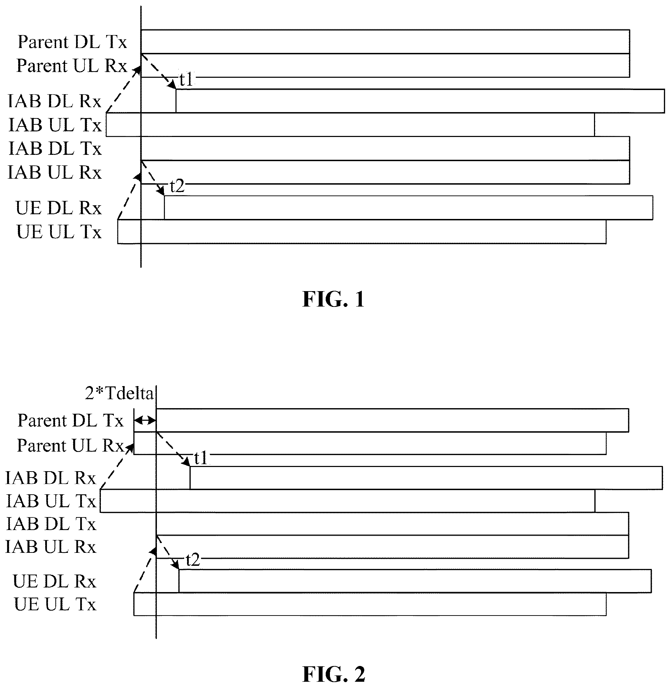

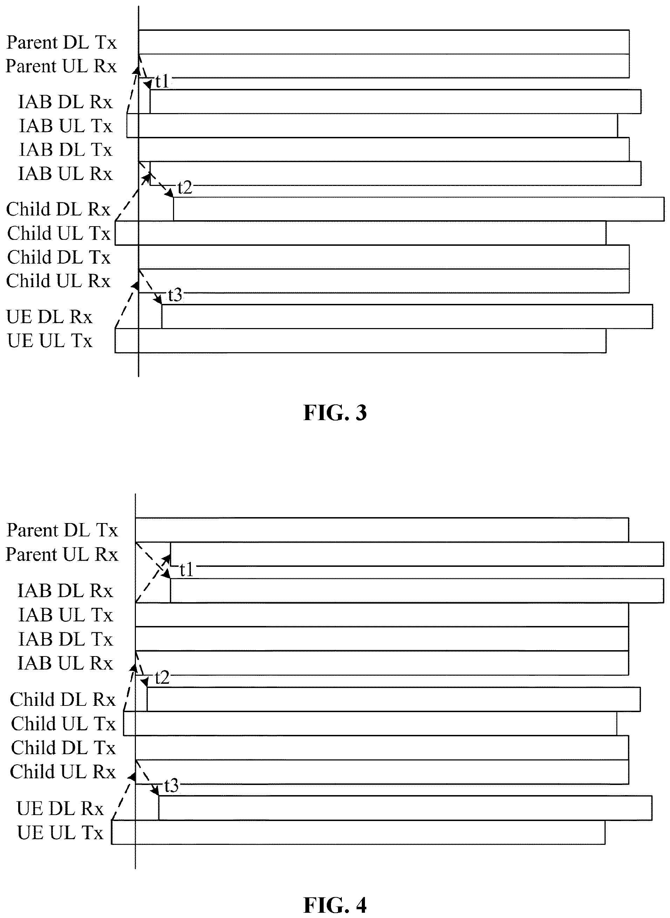

To maintain network synchronization and thus reduce the mutual interference between nodes, each node in the system maintains downlink transmit timing (DL Tx Timing, DTT) alignment (also referred to as IAB-DU transmit timing alignment). In the embodiment of the present application, the timing modes between nodes include the following several types: (1) The downlink transmit timing of a node is aligned with the downlink transmit timing of a donor node (which may also be referred to as the parent node), abbreviated as a first timing mode (which may also be referred to as a non-simultaneous mode). Illustratively, FIG. 1 is a display diagram of a first timing mode according to an embodiment of the present application. As shown in FIG. 1, in the case where the uplink receive timing and downlink transmit timing of a parent node are aligned, the downlink transmit timing of the IAB-node is aligned with the downlink transmit timing of a donor node. FIG. 2 is another display diagram of a first timing mode according to an embodiment of the present application. As shown in FIG. 2, in the case where the uplink receive timing and downlink transmit timing of the parent node are not aligned, the downlink transmit timing of the IAB-node is aligned with the downlink transmit timing of the donor node. (2) The uplink receive timing of a node is aligned with the downlink receive timing of the node; alternatively, the downlink transmit timing of a node is aligned with the downlink transmit timing of a donor node, and the uplink receive timing of the node is aligned with the downlink receive timing of the node. This mode is abbreviated as a second timing mode (also referred to as a synchronization mode). Illustratively, FIG. 3 is a display diagram of a second timing mode according to an embodiment of the present application. As shown in FIG. 3, the uplink receive timing of the IAB-node is aligned with the downlink receive timing of the IAB-node. (3) The uplink transmit timing of a node is aligned with the downlink transmit timing of the node; alternatively, the downlink transmit timing of a node is aligned with the downlink transmit timing of a donor node, and the uplink transmit timing of the node is aligned with the downlink transmit timing of the node. This mode is abbreviated as a third timing mode (also referred to as a simultaneous transmission mode). Illustratively, FIG. 4 is a display diagram of a third timing mode according to an embodiment of the present application. As shown in FIG. 4, the uplink transmit timing of the IAB-node is aligned with the downlink transmit timing of the IAB-node.

Theoretically, IAB-node may determine the DTT of IAB-DU based on the downlink receive timing (DL Rx Timing, DRT) of IAB-MT by forwarding a timing advance (TA) by one-half (denoted as TA/2) to maintain DTT alignment between nodes. However, for reasons such as the implementation of the upstream node side, an offset exists between the uplink receive timing (UL Rx Timing, URT) of an upstream node and the DTT of the upstream node. The IAB-node cannot simply consider that the DTT determined based on the DRT of the IAB-MT by forwarding TA/2 is the actual DTT of IAB-DU. To solve this problem, the system specifies, for the first timing mode, how the IAB-node determines the time difference TD (that is, TD = TA/2 + T_delta; the simplified formula indicates that TD is determined by the timing advance TA and the timing parameter T_delta) between the DTT of the IAB-DU, an upstream node DU, or any node DU and the DRT of the IAB-MT and specifies how the IAB-node determines the DTT of the IAB-DU (that is, DTT = DRT - TD; the simplified formula indicates that the DTT is determined based on the DRT advanced by TD). However, in the second timing mode, how to determine the time offset of the uplink transmit timing of a child node relative to the timing advance is an urgent problem to be solved.

In the embodiments of the present application, a time parameter determination method is proposed. A first communication node may determine the corresponding time offset according to a time offset index pre-configured by a second communication node so that the uplink transmit timing can be accurately determined, thereby improving the transmission efficiency and reliability.

Here, parameters in embodiments of the present application are described.

It is assumed that the first timing mode, the second timing mode, and the third timing mode are all timing modes of the IAB-node.

It is assumed that the second communication node refers to an IAB-node, and the first communication node refers to a child-node or a UE.

$T_c$ denotes a time unit. Illustratively, $T_c = 1/(\Delta f_{max} \cdot N_f)$, $\Delta f_{max} = 480 \cdot 10^3$ Hz, and $N_f = 4096$.

$\Delta_f$ denotes sub-carrier spacing. $\mu$ denotes a sub-carrier spacing index. For example, $\Delta f = 2^\mu \cdot 15 kHz$

FR1 denotes a first frequency range Frequency Range1. For example, FR1 ranges from 410 MHz to 7125 MHz.

FR2 denotes a second frequency range Frequency Range2. For example, FR2 ranges from 24250 MHz to 52600 MHz or 52600 MHz to 71000 MHz.

$T_{TP0} = L_{TP0}/C = N_{TP0} \cdot T_c$ denotes the transmission time between a parent-node and the IAB-node.

$T_{TP1} = L_{TP1}/C = N_{TP1} \cdot T_c$ denotes the transmission time between the IAB-node and a child-node.

$T_{Tdelta}$ denotes a timing parameter of the IAB-node.

$I_{Tdelta}$ denotes a timing parameter index of the IAB-node.

$B_{Tdelta}$ denotes the timing parameter reference of the IAB-node.

$G_{Tdelta}$ denotes the timing parameter granularity of the IAB-node.

$O_{Tdelta}$ denotes the timing parameter signaling overhead of the IAB-node.

$T_{Tg}=-2\cdot T_{Tdelta}$ denotes the deviation between the URT of the IAB-node and the DTT of the IAB-node.

$I_{Tg}$ denotes a deviation index between the URT of the IAB-node and the DTT of the IAB-node.

$B_{Tg}$ denotes the deviation reference between the URT of the IAB-node and the DTT of the IAB-node.

$G_{Tg}$ denotes the deviation granularity between the URT of the IAB-node and the DTT of the IAB-node.

$O_{Tg}$ denotes the deviation signaling overhead between the URT of the IAB-node and the DTT of the IAB-node.

$T_{symbol} = N_{symbol}\cdot T_c$ denotes the orthogonal frequency division multiplexing (OFDM) symbol duration.

$M$ denotes the number of offset OFDM symbols.

$T_{TA} = (N_{TA}+N_{TA,offset})\cdot T_c$ denotes an timing advance of the uplink transmit timing (UL Tx Timing, UTT) of the child-node relative to the DRT of the child-node in a first timing mode in which the IAB-node operates.

The timing advance may be represented by $T_{TA}$ or by $(N_{TA} + N_{TA,offset})\cdot T_c$.

$N_{TA}$ denotes the timing advance, which refers to the timing advance of child-node's UTT relative to child-node's DRT.

$N_{TA,offset}$ denotes a timing advance offset. For example, $N_{TA,offset}$ includes $0\cdot T_c$, $13792\cdot T_c$, $25600\cdot T_c$, and $39936\cdot T_c$.

$N_{offset}\cdot T_c$ denotes the time offset of the child-node's UTT relative to $T_{TA}$ in a second timing mode in which the IAB-node operates.

$I_{offset}$ denotes the time offset index of the child-node's UTT relative to $T_{TA}$ in a second timing mode in which the IAB-node operates.

$B_{offset}$ denotes the time offset reference of the child-node's UTT relative to $T_{TA}$ in a second timing mode in which the IAB-node operates.

$G_{offset}$ denotes the time offset granularity of the child-node's UTT relative to $T_{TA}$ in a second timing mode in which the IAB-node operates.

$O_{offset}$ denotes the time offset signaling overhead of the child-node's UTT relative to $T_{TA}$ in a second timing mode in which the IAB-node operates.

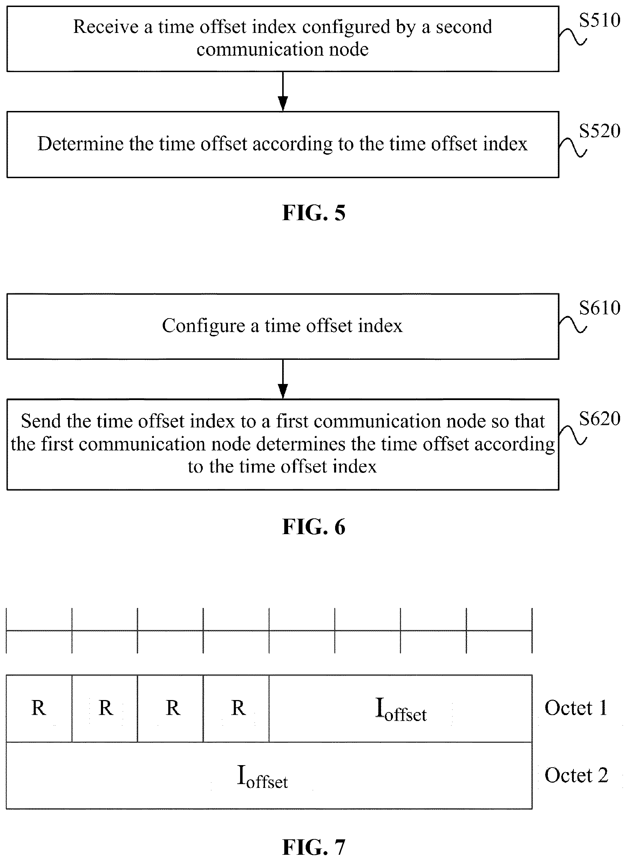

In an embodiment, FIG. 5 is a flowchart of a time parameter determination method according to an embodiment of the present application. This embodiment may be executed by a time parameter determination device. The time parameter determination device may be the first communication node. Illustratively, the first communication node refers to a child node of the second communication node; alternatively, the first communication node is the UE. As shown in FIG. 5, this embodiment includes S510 and S520.

In S510, a time offset index configured by a second communication node is received.

In this embodiment, the second communication node refers to a parent node of the first communication node, and the parent node may be a donor node. In this embodiment, the time offset index may be understood as the time offset index of the UTT of the first communication node relative to $T_{TA}$ when the second communication node uses the second timing mode. In the practical communication process, the second communication node uses the second timing mode, determines the time offset signaling overhead based on a pre-configured time parameter, determines the corresponding time offset index based on the time offset signaling overhead, and transmits the time offset index to the first communication node via the signaling.

S520, the time offset is determined according to the time offset index.

In this embodiment, the time offset may be understood as the time offset of the UTT of the first communication node relative to $T_{TA}$ when the second communication node uses the second timing mode. In this embodiment, the first communication node determines the time offset according to the time offset index pre-configured by the second communication node.

In an embodiment, determining the time offset according to the time offset index includes the operation below.

The time offset is determined according to the time offset index and time offset granularity. In this embodiment, the time offset granularity may be understood as the time offset granularity of the UTT of the first communication node relative to $T_{TA}$ when the second communication node uses the second timing mode. In this embodiment, $I_{offset}$, $G_{offset}$, and $N_{offset}$ may be used to represent the time offset index, the time offset granularity, and the time offset, respectively, and the product value of the time offset index and the time offset granularity may be used as the time offset, that is, $N_{offset} = I_{offset}\square G_{offset}$.

In an embodiment, determining the time offset according to the time offset index includes the operation below.

The time offset is determined according to at least one of the time offset reference, the time offset of a previous moment, or the number of bits occupied by the signaling corresponding to the time offset, the time offset index, and the time offset granularity. In this embodiment, the time offset may be determined according to one or more of the time offset reference, the time offset of a previous moment, and the number of bits occupied by the signaling corresponding to the time offset, the time offset index, and the time offset granularity. Illustratively, the time offset may be determined according to the time offset reference, the time offset index, and the time offset granularity; the time offset may also be determined according to the time offset of a previous moment, the time offset index, and time offset granularity; the time offset may also be determined according to the time offset reference, the time offset of a previous moment, the number of bits occupied by the signaling corresponding to the time offset, the time offset index, and the time offset granularity. In this embodiment, the time offset of a previous moment may be understood as the time offset of the uplink transmit timing of the first communication node relative to $T_{TA}$ at a previous moment and may be represented by $N_{offset\_pre} \cdot T_c$; the time offset reference may be understood as the time offset reference of the uplink transmit timing of the first communication node relative to $T_{TA}$ when the second communication node runs the second timing mode and may be represented by $B_{offset}$; the number of bits occupied by the signaling corresponding to the time offset may be understood as the number of bits occupied by the signaling corresponding to $I_{offset}$ and may be represented by A. In an embodiment, the time offset $N_{offset} \cdot T_c$ is determined in one of the following manners: $N_{offset} \cdot T_c = (B_{offset} + I_{offset} \cdot G_{offset}) \cdot T_c$, $N_{offset} \cdot T_c = (N_{offset\_pre} + I_{offset} \cdot G_{offset}) \cdot T_c$

$$N_{offset} \cdot T_c = (N_{offset\_pre} + (I_{offset} - 2^{A-1}) \cdot G_{offset}) \cdot T_c$$

or

$$N_{offset} \cdot T_c = (N_{offset\_pre} + (I_{offset} - (2^{A-1} - 1)) \cdot G_{offset}) \cdot T_c .$$

In an embodiment, a manner of determining the time offset granularity includes determining the time offset granularity according to the frequency range. In this embodiment, FR may be used to represent the frequency range. The frequency range includes a first frequency range FR1 and a second frequency range FR2. Illustratively, the first frequency range may range from 410 MHz to 7125 MHz, and the second frequency range may range from 24250 MHz to 52600 MHz or from 52600 MHz to 71000 MHz. In an embodiment, different frequency ranges correspond to different time offset granularities. It can be understood that the first frequency range FR1 corresponds to one time offset granularity, and the second frequency range FR2 corresponds to another time offset granularity. In an embodiment, different frequency ranges correspond to the same time offset granularity. It can be understood that the first frequency range FR1 and the second frequency range FR2 correspond to the same time offset granularity.

In an embodiment, a manner of determining the time offset granularity includes determining the time offset granularity according to the sub-carrier spacing. In this embodiment, the sub-carrier spacing may be represented by $\Delta f$. In an embodiment, different sub-carrier spacing corresponds to different time offset granularity. In an embodiment, different sub-carrier spacing corresponds to the same time offset granularity. In an embodiment, the time offset granularity corresponding to different sub-carrier spacing is $16 \cdot 64 / 2^{\mu}$.

In an embodiment, a manner of determining the time offset reference includes determining the time offset reference according to the frequency range. In an embodiment, different frequency ranges correspond to different time offset references. In an embodiment, different frequency ranges correspond to the same time offset reference.

In an embodiment, a manner of determining the time offset reference includes determining the time offset reference according to the sub-carrier spacing. In an embodiment, different sub-carrier spacing corresponds to different time offset references. In an embodiment, different sub-carrier spacing corresponds to the same time offset reference.

In an embodiment, a bearing manner of the signaling corresponding to the time offset index includes one of the following: downlink control information (DCI), a physical downlink control channel (PDCCH), a medium access control-control element (MAC CE), radio resource control (RRC) signaling, or operations, administration and maintenance (OAM) signaling.

In an embodiment, the signaling includes at least one of the following: a time offset index field, a timing advance group identifier field, or a value type field. In an embodiment, the time offset index field may be denoted as an $I_{offset}$ field; the timing advance group identifier field may be denoted as a TAG ID field; the value type field may be denoted as a value type field, indicating that $I_{offset}$ is the index corresponding to the absolute value or relative value of $N_{offset} \cdot T_c$.

In an embodiment, the second communication node runs the first timing mode, and the first communication node adopts the first type of uplink transmit timing and determines the uplink transmit timing of the first communication node according to the timing advance and downlink receive timing. In this embodiment, the timing advance may be expressed as $T_{TA}$, the downlink receive timing and the uplink transmit timing may be expressed as DRT and UTT, respectively, and the difference between the downlink receive timing and the timing advance may be used as the uplink transmit timing of the first communication node, that is, $UTT = DRT - T_{TA}$.

In an embodiment, the first timing mode includes the following: The downlink transmit timing of the second communication node is aligned with the downlink transmit timing of a donor node.

In an embodiment, the second communication node runs the second timing mode, and the first communication node adopts the second type of uplink transmit timing and determines the uplink transmit timing of the first communication node according to the timing advance and downlink receive timing. In this embodiment, when the second communication node runs the second timing mode, the difference between the downlink receive timing and the timing advance may be used as the uplink transmit timing of the first communication node, that is, $UTT = DRT - T_{TA}$.

In an embodiment, the second communication node runs the second timing mode. The first communication node adopts the second type of uplink transmit timing and determines the uplink transmit timing of the first communication node according to at least one of the time offset, the orthogonal frequency division multiplexing (OFDM) symbol duration, or the number of offset OFDM symbols, the timing advance, and the downlink receive timing. In an embodiment, the uplink transmit timing of the first communication node may be determined according to the time offset, the timing advance, and the downlink receive timing; alternatively, the uplink transmit timing of the first communication node may be determined according to the time offset, the orthogonal frequency division multiplexing (OFDM) symbol duration, the number of offset OFDM symbols, the timing advance, and the downlink receive timing. In this embodiment, $T_{symbol}$ and $M$ are used to represent the OFDM symbol duration and the number of offset OFDM symbols, respectively. Illustratively, $UTT=DRT - (T_{TA} + N_{offset} \cdot T_c)$,

$$UTT=DRT - (T_{TA} + N_{offset} \cdot T_c + M \cdot T_{symbol})$$ ,

or $UTT=DRT - (T_{TA} + N_{offset} \cdot T_c - M \cdot T_{symbol})$. The minus sign indicates that the uplink transmit timing of the first communication node is earlier than the downlink receive timing of the first communication node by $T_{TA}$, or by $T_{TA} + N_{offset} \cdot T_c$, $T_{TA} + N_{offset} \cdot T_c + M \cdot T_{symbol}$, or $T_{TA} + N_{offset} \cdot T_c - M \cdot T_{symbol}$.

Illustratively, the uplink transmit timing of the first communication node may also be represented as

$$UTT=DRT - (N_{TA} + N_{TA,offset} + N_{offset}) \cdot T_c$$ ,

$UTT=DRT - ((N_{TA} + N_{TA,offset} + N_{offset}) \cdot T_c + M \cdot T_{symbol})$, or $UTT=DRT - ((N_{TA} + N_{TA,offset} + N_{offset}) \cdot T_c - M \cdot T_{symbol})$. The minus sign indicates that the uplink transmit timing of the first communication node is earlier than the downlink receive timing of the first communication node by $T_{TA}$, or by $(N_{TA} + N_{TA,offset} + N_{offset}) \cdot T_c$, $(N_{TA} + R_{TA,offset} + N_{offset}) \cdot T_c + M \cdot T_{symbol}$, or $(N_{TA} + N_{TA,offset} + N_{offset}) \cdot T_c - M \cdot T_{symbol}$.

In an embodiment, the second communication node uses the second timing mode. The second timing mode includes the following: The uplink receive timing of the second communication node is aligned with the downlink receive timing of the second communication node; alternatively, the downlink transmit timing of the second communication node is aligned with the downlink transmit timing of a donor node, and the uplink receive timing of the second communication node is aligned with the downlink receive timing of the second communication node.

In an embodiment, both the first type of uplink transmit timing and the second type of uplink transmit timing are determined according to one of the following signaling: time offset index invalid signaling, timing mode switching signaling, or uplink transmit timing switching signaling.

In an embodiment, the first communication node receives the time offset index in the n-th time slot or subframe, and the uplink transmit timing of the first communication node is applied to the (n + k)-th time slot or subframe; alternatively, the uplink transmit timing of the first communication node is applied to the (n + k + 1)-th time slot or subframe, where both n and k are positive integers greater than or equal to 0.

In an embodiment, FIG. 6 is a flowchart of another time parameter determination method according to an embodiment of the present application. This embodiment may be executed by a time parameter determination device. The time parameter determination device may be the second communication node. As shown in FIG. 6, this embodiment includes S610 and S620.

In S610, a time offset index is configured.

In S620, the time offset index is sent to a first communication node so that the first communication node determines the time offset according to the time offset index.

In this embodiment, the second communication node runs the second timing mode, determines the range of the time offset according to $T_{TP0}$, $T_{Tdelta}$, $T_{Tg}$, $T_{symbol}$, and $M$, determines the time offset signaling overhead according to the upper and lower bounds in the range of the time offset and the time offset granularity, and determines the corresponding time offset index according to the time offset signaling overhead; then, the time offset index is transmitted to the first communication node via the signaling so that the first communication node determines the time offset according to the time offset index. Thus, the uplink transmit timing of the first communication node is accurately calculated, which improves the transmission efficiency and stability.

In an embodiment, a bearing manner of the signaling corresponding to the time offset index includes one of the following: DCI, PDCCH, MAC CE, RRC signaling, or OAM signaling.

In an embodiment, the signaling includes at least one of the following: a time offset index field; a timing advance group identifier field; or a value type field.

In an embodiment, for the explanation of the time offset index and the time offset, reference is made to the description of the time parameter determination method applied to the first communication node in the preceding embodiments. Details are not repeated herein.

In an embodiment, the determination process of $N_{offset} \cdot T_c$ is described by using an example in which the second communication node is an IAB-NODE and the second communication node uses the second timing mode. In this embodiment, $N_{offset} \cdot T_c$ is determined based on $T_{TP0}$, $T_{Tdelta}$, $T_{Tg}$, $T_{symbol}$, and $M$.

The time offset is determined based on at least one of the following parameters: transmission delay between nodes, a timing parameter, a deviation between node uplink receive timing and node downlink transmit timing, or an OFDM symbol offset. In an embodiment, the time offset is determined in one of the following manners:

$$N_{offset} \cdot T_c = -(T_{TP0} - 2 \cdot T_{Tdelta}).$$

$$N_{offset} \cdot T_c = -(T_{TP0} + T_{Tg}).$$

$$N_{offset} \cdot T_c = -(T_{TP0} - 2 \cdot T_{Tdelta} - M \cdot T_{symbol}).$$

$$N_{offset} \cdot T_c = -(T_{TP0} + T_{Tg} - M \cdot T_{symbol}).$$

$$N_{offset} \cdot T_c = -(T_{TP0} - 2 \cdot T_{Tdelta} + M \cdot T_{symbol}).$$

$$N_{offset} \cdot T_c = -(T_{TP0} + T_{Tg} + M \cdot T_{symbol}).$$

$+ M \cdot T_{symbol}$ in $N_{offset} \cdot T_c = -(T_{TP0} - 2 \cdot T_{Tdelta} - M \cdot T_{symbol})$ and $N_{offset} \cdot T_c = -(T_{TP0} + T_{Tg} - M \cdot T_{symbol})$ indicates that the uplink transmit timing of a node is forward (or to the left as in FIG. 2) in advance by M OFDM symbols; $- M \cdot T_{symbol}$ in $N_{offset} \cdot T_c = -(T_{TP0} - 2 \cdot T_{Tdelta} + M \cdot T_{symbol})$ and $N_{offset} \cdot T_c = -(T_{TP0} + T_{Tg} + M \cdot T_{symbol})$ indicates that the uplink transmit timing of the node is delayed by M OFDM symbols backward (or to the right as in FIG. 2).

In an embodiment, the determination process of the range of $N_{offset} \cdot T_c$ is described by using an example in which the second communication node is an IAB-NODE and the second communication node uses the second timing mode. In this embodiment, the range of $N_{offset} \cdot T_c$ is determined based on $T_{TP0}$, $T_{Tdelta}$, and $T_{Tg}$.

In an embodiment, the range of $T_{TP0}$ is as follows: It is assumed that the distance between nodes is $L_{TP0} = 500$ meters, and $C = 3 \cdot 10^8$ m/s denotes the speed of light or the propagation speed of electromagnetic waves; $T_c = 1/(\Delta f_{max} \cdot N_f)$, $\Delta f_{max} = 480 \cdot 10^3$ Hz, and $N_f = 4096$; then $N_{TP0} = LTP0 /(C \cdot T_c)$ is calculated according the formula that $T_{TP0} = L_{TP0} /C = N_{TP0} \cdot T_c$, $N_{TP0} = 3276.8$ is obtained, and 3276.8 is rounded up to obtain $N_{TP0} = 3277$.

Table 1 is a schematic table of the value range of $T_{Tdelta}$ according to an embodiment of the present application. As described in Table 1, the value range of $T_{Tdelta}$ is related to the timing advance offset $N_{TA,offset}$ and the sub-carrier space (SCS) value.

Table 1 A Value Range Table of $T_{Tdelta}$

| SCS [kHz] | Min $T_{Tdelta}$ [Tc] | Max $T_{Tdelta}$ [Tc] |
|---|---|---|
| 15 | $- N_{TA\ offset} /2 - 70528$ | $- N_{TA\ offset} /2 + 6256$ |
| 30 | $- N_{TA\ offset} /2 - 3\ 5328$ | $- N_{TA\ offset} /2 + 6128$ |

(continued)

| SCS [kHz] | Min $T_{Tdelta}$ [Tc] | Max $T_{Tdelta}$ [Tc] |
|---|---|---|
| 60 | $- N_{TA\,offset}/2 - 17664$ | $- N_{TA\,offset}/2 + 6032$ |
| 120 | $- N_{TA\,offset}/2 - 8816$ | $- N_{TA\,offset}/2 + 6032$ |

Table 2 is a schematic table of the value range of $T_{Tg}$ according to an embodiment of the present application. As described in Table 2, according to the formula that $T_{Tg} = -2 \cdot T_{Tdelta}$, the value range of $T_{Tg}$ is related to the timing advance offset $N_{TA,offset}$, the SCS value, and the value of $T_{Tdelta}$.

Table 2 A Value Range Table of $T_{Tg}$

| SCS [kHz] | Min $T_{Tg}$ [Tc] | Max $T_{Tg}$ [Tc] |
|---|---|---|
| 15 | $N_{TA\,offset} - 2*6256$ | $N_{TA\,offset} + 2*70528$ |
| 30 | $N_{TA\,offset} - 2*6128$ | $N_{TA\,offset} + 2*35328$ |
| 60 | $N_{TA\,offset} - 2*6032$ | $N_{TA\,offset} + 2*17664$ |
| 120 | $N_{TA\,offset} - 2*6032$ | $N_{TA\,offset} + 2*8816$ |

Table 3 is a schematic table of the value range of $N_{offset} \cdot T_c$ according to an embodiment of the present application. As described in Table 3, according to the formula that $N_{offset} \cdot T_c = - (T_{TP0} - 2 \cdot T_{Tdelta})$, the value range of $N_{offset} \cdot T_c$ is related to the SCS value, the value of $T_{Tdelta}$, and the value of $T_{TP0}$. $T_{TP0} = L_{TP0}/C = N_{TP0} \cdot T_c$, representing the transmission time between a secondary node and the IAB-node.

Table 3 A Value Range Table of $N_{offset} \cdot T_c$

| SCS [kHz] | Min $N_{offset} \cdot T_c$ [Tc] | Max $N_{offset} \cdot T_c$ [Tc] |
|---|---|---|
| 15 | $- N_{TA\,offset} - 2*70528 - 3277$ | $- N_{TA\,offset} + 2*6256 - 3277$ |
| 30 | $- N_{TA\,offset} - 2*35328 - 3277$ | $- N_{TA\,offset} + 2*6128 - 3277$ |
| 60 | $- N_{TA\,offset} - 2*17664 - 3277$ | $- N_{TA\,offset} + 2*6032 - 3277$ |
| 120 | $- N_{TA\,offset} - 2*8816 - 3277$ | $- N_{TA\,offset} + 2*6032 - 3277$ |

In an embodiment, the determination process of the range of $N_{offset} \cdot T_c$ is described by using an example in which the second communication node is an IAB-NODE and the second communication node uses the second timing mode. In this embodiment, the range of $N_{offset} \cdot T_c$ is determined based on $T_{TP0}$, $T_{Tdelta}$, $T_{Tg}$, $T_{symbol}$, and $M$.

In an embodiment, the range of $T_{TP0}$ is as follows: It is assumed that the distance between nodes is $L_{TP0} = 500$ meters, and $C = 3 \cdot 10^8$ m/s denotes the speed of light or the propagation speed of electromagnetic waves; $T_c = 1/(\Delta f_{max} \cdot N_f)$, $\Delta f_{max} = 480 \cdot 10^3$ Hz, and $Nf = 4096$; then $N_{TP0} = L_{TP0}/(C \cdot T_c)$ is calculated according the formula that $T_{TP0} = L_{TP0}/C = N_{TP0} = T_c$, $N_{TP0} = 3276.8$ is obtained, and 3276.8 is rounded up to obtain $N_{TP0} = 3277$.

In this embodiment, the value ranges of $T_{Tdelta}$ and $T_{Tg}$ are described in Table 1 and Table 2.

In this embodiment, the value range of $T_{symbol}$ is as follows: It is assumed that the offset is one OFDM symbol, that is, $M = 1$, the sub-carrier spacing (SCS) is $\Delta f = 15 \cdot 10^3$ Hz, and the cyclic prefix $N_{CP} = 144 \times 64$; then $N_{symbol} = (1/(\Delta f \cdot T_c)) + N_{CP}$ can be calculated according to the formula that $T_{symbol} = N_{symbol} \cdot T_c$, and $N_{symbol} = 2048 \times 64 + 144 \times 64 = 140288$ is obtained.

In this embodiment, the value range of $N_{offset} \cdot T_c$ is as follows: According to the formula that $N_{offset} \cdot T_c = - (T_{TP0} - 2 \cdot T_{Tdelta} - M \cdot T_{symbol})$, the value range of $N_{offset} \cdot T_c$ is described in Table 4.

Table 4 Another Value Range Table of $N_{offset} \cdot T_c$

| SCS [kHz] | Min $N_{offset} \cdot T_c$ [Tc] | Max $N_{offset} \cdot T_c$ [Tc] |
|---|---|---|
| 15 | $- N_{TA\,offset} - 2*70528 - 3277 + 140288$ | $- N_{TA\,offset} + 2*6256 - 3277 + 140288$ |

(continued)

| SCS [kHz] | Min $N_{offset} \cdot T_c$ [Tc] | Max $N_{offset} \cdot T_c$ [Tc] |
|---|---|---|
| 30 | $- N_{TA\ offset} - 2*35328 - 3277 + 140288$ | $- N_{TA\ offset} + 2*6128 - 3277 + 140288$ |
| 60 | $- N_{TA\ offset} - 2* 17664 - 3277 + 140288$ | $- N_{TA\ offset} + 2*6032 - 3277 + 140288$ |
| 120 | $- N_{TA\ offset} - 2*8816 - 3277 + 140288$ | $- N_{TA\ offset} + 2*6032 - 3277 + 140288$ |

In an embodiment, the configuration process of *Ioffset* is described by using an example in which the first communication node is a CHILD-NODE, the second communication node is an IAB-NODE, and the second communication node uses the second timing mode.

In this embodiment, $O_{offset}$ is calculated in the following manner: $L_{offset}$ denotes the lower bound of $N_{offset} \cdot T_c$, $U_{offset}$ denotes the upper bound of $N_{offset} \cdot T_c$, and then signaling overhead is that $O_{offset} = \lceil log_2((U_{offset} - L_{offset})/G_{offset}) \rceil$ , where $\lceil \rceil$ represents an upward rounding operation. In an embodiment, as described in the second row in Table 2, it is assumed that $G_{offset}$ is $64 \cdot T_c$ , and $O_{offset} = \left\lceil \log_2 \left( \left( 2*6256 - \left( -2*70528 \right) \right) / 64 \right) \right\rceil = 12$ bits, where the 12 bits represents $I_{offset}$ .

In this embodiment, a bearing manner of the signaling corresponding to $I_{offset}$ includes physical layer (PHY layer) signaling (for example, DCI and PDCCH), medium access control layer (MAC layer) signaling (for example, MAC-CE), RRC layer signaling (for example, broadcast signaling or dedicated signaling), and OAM signaling.

In the embodiments of the present application, MAC-CE is used as an example to describe the configuration manner of MAC-CE. The configuration manner of DCI, PDCCH, RRC layer signaling, or OAM signaling are in the same way as the configuration manner of MAC-CE. The signaling includes at least one of the following: any combination of a $I_{offset}$ field, a TAG ID field, a value type field, and an R field, which are not listed one by one herein.

In this embodiment, MAC-CE is determined according to one of the following manners.

In manner 1, FIG. 7 is a diagram illustrating the configuration of a MAC CE according to an embodiment of the present application. As shown in FIG. 7, it is assumed that the MAC-CE occupies X bytes, for example, X = 2 bytes; the $I_{offset}$ field occupies any A bits in 2 bytes, for example, A = 12 bits; the R field represents the remaining 4 bits and serves as the reserved bits. A = 12; illustratively, $I_{offset}$ may be an integer ranging from 0 to 4095; alternatively, $I_{offset}$ may be an integer ranging from -2047 to 2048; alternatively, $I_{offset}$ may be an integer ranging from -2048 to 2047.

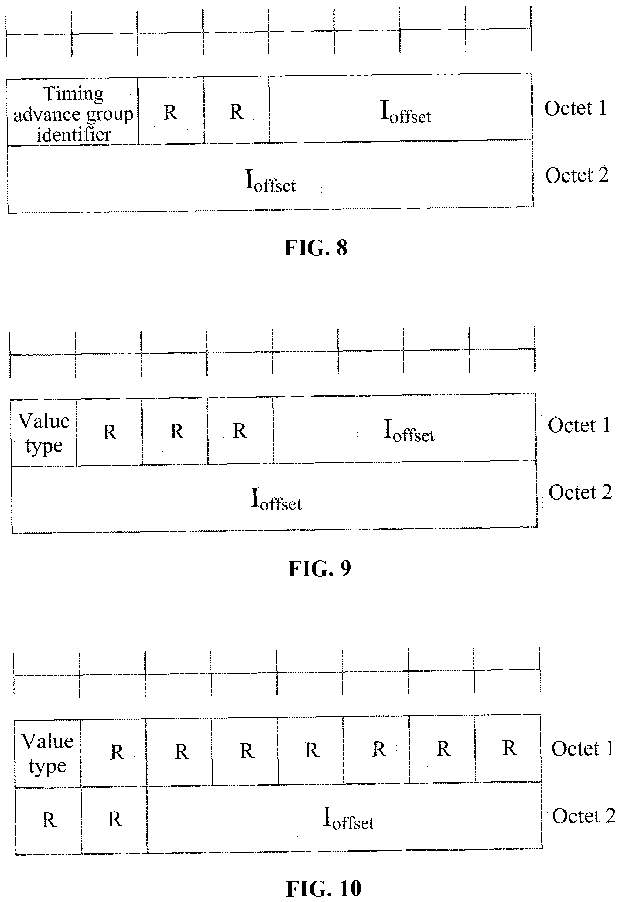

In manner 2, FIG. 8 is another diagram illustrating the configuration of a MAC CE according to an embodiment of the present application. As shown in FIG. 8, it is assumed that the MAC-CE occupies X bytes, for example, X = 2 bytes; the $I_{offset}$ field occupies any A bits in 2 bytes, for example, A = 12 bits; the TAG ID field occupies any B bits, for example, B = 2 bits. Four binary states ("00", "01", "10", and " 11 ") of the B bits may each represent the maximum of four TAGs, that is, different TAGs may correspond to different $I_{offset}$ ; in other words, the same $I_{offset}$ corresponds to the same TAG. TAG indicates that the uplink transmission configuration of cells in the serving cell group configured by RRC uses the same reference cell timing and the same timing advance. The R field represents the remaining 2 bits and serves as the reserved bits. A = 12; illustratively, $I_{offset}$ may be an integer ranging from 0 to 4095; alternatively, $I_{offset}$ may be an integer ranging from -2047 to 2048; alternatively, $I_{offset}$ may be an integer ranging from - 2048 to 2047.

In manner 3, FIG. 9 is another diagram illustrating the configuration of a MAC CE according to an embodiment of the present application; FIG. 10 is another diagram illustrating the configuration of a MAC CE according to an embodiment of the present application. As shown in FIG. 9 and FIG. 10, it is assumed that the MAC-CE occupies X bytes, for example, X = 2 bytes; the $I_{offset}$ field occupies any A bits in 2 bytes, for example, A = 12 bits, or A = 6 bits; the value type field occupies any C bits, for example, two binary states ("0" and " 1 ") of the (C = 1) bits may indicate that $I_{offset}$ is the index corresponding to the absolute value of $N_{offset} \cdot T_c$ and that $I_{offset}$ is the index corresponding to the relative value of $N_{offset} \cdot T_c$ , respectively. As shown in FIG. 9, when $I_{offset}$ is the index corresponding to the absolute value of $N_{offset} \cdot T_c$ , A = 12 bits, and the R field represents the remaining 3 bits and serves as reserved bits. As shown in FIG. 10, when $I_{offset}$ is the index corresponding to the relative value of $N_{offset} \cdot T_c$ , A = 6 bits, and the R field represents the remaining 9 bits and serves as reserved bits. A = 12; illustratively, $I_{offset}$ may be an integer ranging from 0 to 4095; alternatively, $I_{offset}$ may be an integer ranging from -2047 to 2048; alternatively, $I_{offset}$ may be an integer ranging from -2048 to 2047. A = 6; illustratively, $I_{offset}$ may be an integer ranging from 0 to 63; alternatively, $I_{offset}$ may be an integer ranging from -31 to 32; alternatively, $I_{offset}$ may be an integer ranging from -32 to 31.

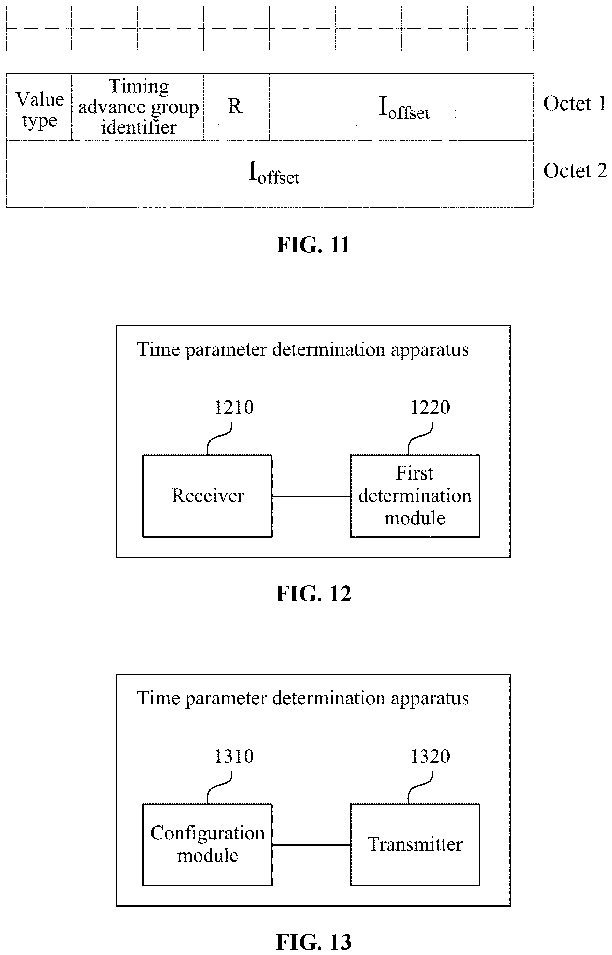

In manner 4, FIG. 11 is another diagram illustrating the configuration of a MAC CE according to an embodiment of the present application. As shown in FIG. 11, it is assumed that the MAC-CE occupies X bytes, for example, X = 2 bytes; the $I_{offset}$ field occupies any A bits in 2 bytes, for example, A= 12 bits; the TAG ID field occupies any B bits. For example, Four binary states ("00", "01", "10", and " 11") of the (B = 2) bits may each represent the maximum of four TAGs, that is, different TAGs may correspond to different $I_{offset}$; in other words, the same $I_{offset}$ corresponds to the same TAG. TAG indicates that the uplink transmission configuration of cells in the serving cell group configured by RRC uses the same reference cell timing and the same timing advance. In FIG. 11, the value type field occupies any C bits, for example, two binary states ("0" and "1") of the (C = 1) bits may indicate that $I_{offset}$ is the index corresponding to the absolute value of $N_{offset} \cdot T_c$ and that $I_{offset}$ is the index corresponding to the relative value of $N_{offset} \cdot T_c$; the R field represents the remaining 1 bit and serves as reserved bit. A = 12; illustratively, $I_{offset}$ may be an integer ranging from 0 to 4095; alternatively, $I_{offset}$ may be an integer ranging from -2047 to 2048; alternatively, $I_{offset}$ may be an integer ranging from -2048 to 2047.

In an embodiment, the determination manner of the time offset granularity $G_{offset}$ includes one of the following.

Different frequency ranges (FRs) correspond to different time offset granularities.

The time offset granularity corresponding to the first frequency range FR1 is $G_{offset\_FR1}$, for example, $64 \cdot T_c$.

The time offset granularity corresponding to the second frequency range FR2 is $G_{offset\_FR}2$, for example, $32 \cdot T_c$.

Different frequency ranges (FRs) correspond to the same time offset granularity.

The time offset granularity corresponding to the first frequency range FR1 is $G_{offset}$, for example, $64. T_,$

The time offset granularity corresponding to the second frequency range FR2 is $G_{offset}$, for example, $64 \cdot T_c$.

Different sub-carrier spacings $\Delta f$ correspond to different time offset granularities.

The time offset granularity corresponding to the sub-carrier spacing of 15 kHz is $G_{offset\_\mu0}$.

The time offset granularity corresponding to the sub-carrier spacing of 30 kHz is $G_{offset\_\mu1}$.

The time offset granularity corresponding to the sub-carrier spacing of 60 kHz is $G_{offset\_\mu2}$.

The time offset granularity corresponding to the sub-carrier spacing of 120 kHz is $G_{offset\_\mu3}$.

The time offset granularity corresponding to the sub-carrier spacing of 240 kHz is $G_{offset\_\mu4}$.

The time offset granularity corresponding to the sub-carrier spacing of 480 kHz is $G_{offset\_\mu5}$.

Different sub-carrier spacings $\Delta f$ correspond to the same time offset granularity.

The time offset granularity corresponding to the sub-carrier spacing of 15 kHz is $G_{offset}$.

The time offset granularity corresponding to the sub-carrier spacing of 30 kHz is $G_{offset}$.

The time offset granularity corresponding to the sub-carrier spacing of 60 kHz is $G_{offset}$.

The time offset granularity corresponding to the sub-carrier spacing of 120 kHz is $G_{offset}$.

The time offset granularity corresponding to the sub-carrier spacing of 240 kHz is $G_{offset}$.

The time offset granularity corresponding to the sub-carrier spacing of 480 kHz is $G_{offset}$.

In an embodiment, the determination manner of the time offset reference $B_{offset}$ includes one of the following.

Different frequency ranges (FRs) correspond to different time offset references.

The time offset reference corresponding to the first frequency range FR1 is $B_{offset\_FR1}$.

The time offset reference corresponding to the second frequency range FR2 is $B_{offset\_FR2}$.

Different frequency ranges (FRs) correspond to the same time offset reference.

The time offset reference corresponding to the first frequency range FR1 is $B_{offset}$.

The time offset reference corresponding to the second frequency range FR2 is $B_{offset}$.

Different sub-carrier spacings $\Delta f$ correspond to different time offset references.

The time offset reference corresponding to the sub-carrier spacing of 15 kHz is $B_{offset\_\mu0}$.

The time offset reference corresponding to the sub-carrier spacing of 30 kHz is $B_{offset\_\mu1}$.

The time offset reference corresponding to the sub-carrier spacing of 60 kHz is $B_{offset\_\mu2}$.

The time offset reference corresponding to the sub-carrier spacing of 120 kHz is $B_{offset\_\mu3}$.

The time offset reference corresponding to the sub-carrier spacing of 240 kHz is $B_{offset\_\mu4}$.

The time offset reference corresponding to the sub-carrier spacing of 480 kHz is $B_{offset\_\mu5}$.

Different sub-carrier spacing $\Delta f$ correspond to the same time offset reference.

The time offset reference corresponding to the sub-carrier spacing of 15 kHz is $B_{offset}$.

The time offset reference corresponding to the sub-carrier spacing of 30 kHz is $B_{offset}$.

The time offset reference corresponding to the sub-carrier spacing of 60 kHz is $B_{offset}$.

The time offset reference corresponding to the sub-carrier spacing of 120 kHz is $B_{offset}$.

The time offset reference corresponding to the sub-carrier spacing of 240 kHz is $B_{offset}$.

The time offset reference corresponding to the sub-carrier spacing of 480 kHz is $B_{offset}$.

In an embodiment, the calculation process of the time offset $T_{offset}$ includes the following: The IAB-node configures $I_{offset}$ to a child-node.

For $I_{offset}$ signaling with no value type field, the child-node calculates $N_{offset} \cdot T_c$ based on the formula that $N_{offset} \cdot T_c = (B_{offset} + I_{offset} \cdot G_{offset}) \cdot T_c$ or the formula that $N_{offset} \cdot T_c$.

For $I_{offset}$ signaling with a value type field, and when $I_{offset}$ is the index corresponding to the absolute value of $N_{offset} \cdot T_c$, the child-node calculates $N_{offset} \cdot T_c$ based on the formula that $N_{offset} \cdot T_c = (B_{offset} + I_{offset} \cdot G_{offset}) \cdot T_c$ or the formula that $N_{offset} \cdot T_c = I_{offset} \cdot G_{offset} \cdot T_c$.

For $I_{offset}$ signaling with a value type field, and when $I_{offset}$ is the index corresponding to the relative value of

$N_{offset} \cdot T_c$ , the child-node calculates $N_{offset} \cdot T_c$ based on the formula that $N_{offset} \cdot T_c = (N_{offset\_pre} + I_{offset} \cdot G_{offset}) \cdot T_c$ , the formula that $N_{offset} \cdot T_c = (N_{offset\_pre} + (I_{offset} - 2^{A-1}) \cdot G_{offset}) \cdot T_c$ , or the formula that $N_{offset} \cdot T_c = (N_{offset\_pre} + (I_{offset} - (2^{A-1} - 1)) \cdot G_{offset}) \cdot T_c$, where $N_{offset\_pre} \cdot T_c$ denotes the time offset of the child-node UTT relative to $T_{TA}$ at a previous moment, and a plus sign denotes that a relative adjustment is performed on $N_{offset} \cdot T_c$ based on $N_{offset\_pre} \cdot T_c$ .

In an embodiment, the determination process of the uplink transmit timing UTT is described by using an example in which the first communication node is a CHILD-NODE, the second communication node is an IAB-NODE, and the second communication node uses the second timing mode.

In an embodiment, the manner of acquiring the UTT includes one of the following:

In the case where the IAB-node uses the first timing mode, a first type of UTT of a child-node (child-MT) is acquired in the following manner: $UTT = DRT - T_{TA}$.

In the case where the IAB-node uses the second timing mode, a second type of UTT of a child-node (child-MT) is acquired in one of the following manners: $U_{TT} = DRT - T_{TA}$ , $UTT = DRT - (T_{TA} + N_{offset} \cdot T_c)$ , $UTT = DRT - (T_{TA} + N_{offset} \cdot T_c + M \cdot T_{symbol})$ , or $UTT = DRT - (T_{TA} + N_{offset} \cdot T_c - M \cdot T_{symbol})$.

The minus sign indicates that the child-node UTT is earlier than the child-node DRT by $T_{TA}$, $T_{TA} + N_{offset} \cdot T_c$ , $T_{TA} + N_{offset} \cdot T_c + M \cdot T_{symbol}$ , or $T_{TA} + N_{offset} \cdot T_c - M \cdot T_{symbol}$.

In an embodiment, UTT determination signaling is explained. In the practical operation process, the IAB-node may be switched between the first timing mode and the second timing mode, and then the UTT signaling that the IAB-node is using at this time is sent to the child-node.

For example, the DCI, PDCCH, MAC-CE, RRC signaling, or OAM signaling includes $I_{offset}$ invalid signaling, timing mode switching signaling, or UTT switching signaling.

For example, the UTT being used by the IAB-node at this time is determined through $I_{offset}$ invalid signaling. It is assumed that the $I_{offset}$ invalid signaling is D bits, for example, two binary states ("0" and " 1") of the (D = 1) bit may indicate that $I_{offset}$ is invalid and that $I_{offset}$ is valid.

When $I_{offset}$ is invalid, the first type of UTT is used. When $I_{offset}$ is valid, the second type of UTT is used.

For example, the UTT being used by the IAB-node at this time is determined through timing mode switching signaling. It is assumed that the timing mode switching signaling is E bits, for example, two binary states ("0" and "1") of the (E = 1) bit may represent the first timing mode and the second timing mode. In the first timing mode, the first type of UTT is used. In the second timing mode, the second type of UTT is used.

For example, the UTT being used by the IAB-node at this time is determined through UTT switching signaling. It is assumed that the UTT switching signaling is F bits, for example, two binary states ("0" and " 1 ") of the (F = 1) bit may represent the first type of UTT and the second type of UTT, respectively.

In an embodiment, the effective time of UTT is as follows: Assuming that the child-node receives $I_{offset}$ in the n-th slot or subframe, the corresponding child-node UTT is applied to the (n + k)-th slot or subframe or is applied to the (n + k +1)-th slot or subframe, where n and k are integers greater than or equal to 0.

In an embodiment, FIG. 12 is a block diagram illustrating the structure of a time parameter determination apparatus according to an embodiment of the present application. The embodiment is applied to a first communication node. As shown in FIG. 9, the time parameter determination apparatus in this embodiment includes a receiver 1210 and a first determination module 1220.

The receiver 1210 is configured to receive a time offset index configured by a second communication node.

The first determination module 1220 is configured to determine the time offset according to the time offset index.

In an embodiment, the first determination module 1220 includes the operation below.

The time offset is determined according to the time offset index and time offset granularity.

In an embodiment, the first determination module 1220 includes the operation below.

The time offset is determined according to at least one of the time offset reference, the time offset of a previous moment, or the number of bits occupied by the signaling corresponding to the time offset, the time offset index, and the time offset granularity.

In an embodiment, a manner of determining the time offset granularity includes determining the time offset granularity according to the frequency range.

In an embodiment, a manner of determining the time offset granularity includes determining the time offset granularity according to the sub-carrier spacing.

In an embodiment, a manner of determining the time offset reference includes determining the time offset reference according to the frequency range.

In an embodiment, a manner of determining the time offset reference includes determining the time offset reference according to the sub-carrier spacing.

In an embodiment, a bearing manner of the signaling corresponding to a time offset index includes one of the following: downlink control information (DCI), a physical downlink control channel (PDCCH), a medium access control-control element (MAC CE), radio resource control (RRC) signaling, or operations, administration and maintenance (OAM) signaling.

In an embodiment, the signaling includes at least one of the following: a time offset index field, a timing advance group identifier field, or a value type field.

In an embodiment, the second communication node runs the first timing mode; the first communication node adopts the first type of uplink transmit timing and determines the uplink transmit timing of the first communication node according to the timing advance and downlink receive timing.

In an embodiment, the first timing mode includes the following: The downlink transmit timing of the second communication node is aligned with the downlink transmit timing of a donor node.

In an embodiment, the second communication node runs the second timing mode; the first communication node adopts the second type of uplink transmit timing and determines the uplink transmit timing of the first communication node according to the timing advance and downlink receive timing.

In an embodiment, the second communication node runs the second timing mode; the first communication node adopts the second type of uplink transmit timing and determines the uplink transmit timing of the first communication node according to at least one of the time offset, the orthogonal frequency division multiplexing (OFDM) symbol duration, or the number of offset OFDM symbols, the timing advance, and the downlink receive timing.

In an embodiment, the second communication node uses the second timing mode. The second timing mode includes the following: The uplink receive timing of the second communication node is aligned with the downlink receive timing of the second communication node; alternatively, the downlink transmit timing of the second communication node is aligned with the downlink transmit timing of a donor node, and the uplink receive timing of the second communication node is aligned with the downlink receive timing of the second communication node.

In an embodiment, both the first type of uplink transmit timing and the second type of uplink transmit timing are determined according to one of the following signaling: time offset index invalid signaling; timing mode switching signaling; or uplink transmit timing switching signaling.

In an embodiment, the first communication node receives the time offset index in the n-th time slot or subframe, and the uplink transmit timing of the first communication node is applied to the (n + k)-th time slot or subframe; alternatively, the uplink transmit timing of the first communication node is applied to the (n + k + 1)-th time slot or subframe, where both n and k are positive integers greater than or equal to 0.

The time parameter determination apparatus provided in the embodiment is configured to perform the time parameter determination method applied to a first communication node in the embodiment shown in FIG. 1 and has similar implementation principles and technical effects, which are not repeated herein.

In an embodiment, FIG. 13 is a block diagram illustrating the structure of another time parameter determination apparatus according to an embodiment of the present application. The embodiment is applied to a second communication node. As shown in FIG. 13, the time parameter determination apparatus in this embodiment includes a configuration module 1310 and a transmitter 1320.

The configuration module 1310 is configured to configure a time offset index.

The transmitter 1320 is configured to send the time offset index to a first communication node so that the first communication node determines the time offset according to the time offset index.

The time parameter determination apparatus provided in the embodiment is configured to perform the time parameter determination method applied to a second communication node in the embodiment shown in FIG. 2 and has similar implementation principles and technical effects, which are not repeated herein.

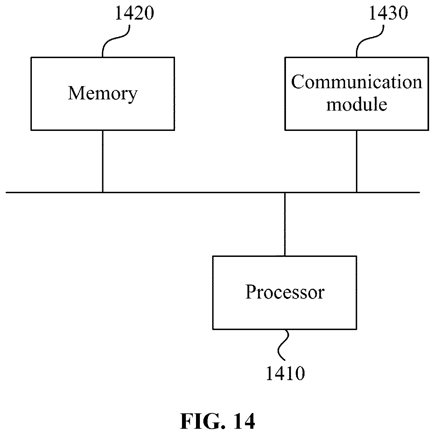

FIG. 14 is a diagram illustrating the structure of a communication device according to an embodiment of the present application. As shown in FIG. 14, the communication device provided in the present application includes a processor 1410, a memory 1420, and a communication module 1430. One or more processors 1410 may be provided in the device, with one processor 1410 shown as an example in FIG. 14. One or more memories 1420 may be provided in the device. One memory 1420 is shown as an example in FIG. 14. The processor 1410, the memory 1420, and the communication module 1430 in the device may be connected via a bus or in other manners. FIG. 14 shows the connection via a bus as an example. In the embodiment, the device may be a first communication node.

The memory 1420, as a computer-readable storage medium, may be configured to store software programs, computer executable programs, and modules such as program instructions/modules corresponding to the device in any embodiment of the present application (such as the receiver 1210 and the first determination module 1220 in the time parameter determination apparatus). The memory 1420 may include a program storage region and a data storage region. The program storage region may store an operating system and an application program required by at least one function. The data storage region may store data created according to the use of the device. Additionally, the memory 1420 may include a high-speed random-access memory and may also include a nonvolatile memory such as at least one disk memory, flash memory, or another nonvolatile solid-state memory. In some examples, the memory 1420 may also include memories that are remotely disposed relative to the processor 1410, and these remote memories may be connected to the device via a network. Examples of the preceding network include but are not limited to, the Internet, an intranet, a local area network, a mobile communication network, and a combination thereof.

The communication module 1430 is configured to perform communication interaction between a first communication node, a second communication node, and a donor node.

In the case where the time parameter determination device is a first communication node, the preceding device may be configured to execute the time parameter determination method applied to the first communication node in any one of the preceding embodiments and has corresponding functions and effects.

In the case where the time parameter determination device is a second communication node, the preceding device may be configured to execute the time parameter determination method applied to the second communication node in any one of the preceding embodiments and has corresponding functions and effects.

The embodiment of the present application also provides a storage medium including computer-executable instructions that, when executed by a computer processor, are configured to execute a time parameter determination method applied to a first communication node. The method includes receiving a time offset index configured by a second communication node and determining the time offset according to the time offset index.

The embodiment of the present application also provides a storage medium including computer-executable instructions that, when executed by a computer processor, are configured to execute a time parameter determination method applied to a second communication node. The method includes configuring a time offset index and sending the time offset index to a first communication node so that the first communication node determines the time offset according to the time offset index.

It is to be understood by those skilled in the art that the term "user equipment" covers any suitable type of wireless user equipment, for example, a mobile phone, a portable data processing apparatus, a portable web browser, or a vehicle-mounted mobile station.

Generally speaking, various embodiments of the present application may be implemented in hardware or special-purpose circuits, software, logic, or any combination thereof. For example, some aspects may be implemented in hardware while other aspects may be implemented in firmware or software executable by a controller, a microprocessor, or another calculation apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, state setting data, or source or object codes written in any combination of one or more programming languages.

A block diagram of any logic flow among the drawings of the present application may represent program procedures, may represent interconnected logic circuits, modules, and functions, or may represent a combination of program procedures with logic circuits, modules, and functions. Computer programs may be stored in a memory. The memory may be of any type suitable for a local technical environment and may be implemented using any suitable data storage technology such as, but not limited to, a read-only memory (ROM), a random-access memory (RAM), or an optical memory device and system (a digital video disc (DVD), or a compact disc (CD)). Computer-readable media may include non-transitory storage media. The data processor may be of any type suitable for a local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

The above are only preferred embodiments of the present application and are not intended to limit the present application, and for those skilled in the art, the present application may have various modifications and variations. Any modifications, equivalent substitutions, improvements and the like made within the spirit and principle of the present application should fall within the scope of the present application.

**Claims**

1. A time parameter determination method, being applied to a first communication node and comprising:

in a case where mobile terminal transmit timing of the first communication node corresponds to a first timing mode, determining, by the first communication node, the mobile terminal transmit timing of the first communication node based on a timing advance of $T_{TA}$ before mobile terminal receive timing of the first communication node;
in a case where mobile terminal transmit timing of the first communication node corresponds to a second timing mode, determining, by the first communication node, the mobile terminal transmit timing of the first communication node based on a timing advance of $T_{TA} + N_{offset} \cdot T_c$ before mobile terminal receive timing of the first communication node; or
in a case where mobile terminal transmit timing of the first communication node corresponds to a third timing mode, determining, by the first communication node, the mobile terminal transmit timing of the first communication node based on distribution unit transmit timing of the first communication node;

wherein $T_{TA}$ denotes a timing advance;

$N_{offset}$ denotes a time offset; and

$T_c$ denotes a time unit, $T_c = 1/(\Delta f_{max} \cdot N_f)$, $\Delta f_{max} = 480 \cdot 10^3$ Hz, and $N_f = 4096$.

**2.** The method of claim 1, wherein the first timing mode comprises that the distribution unit transmit timing of the first communication node is aligned with distribution unit transmit timing of a donor node.

**3.** The method of claim 1, wherein the second timing mode comprises that:

distribution unit receive timing of a second communication node is aligned with mobile terminal receive timing of the second communication node; or

distribution unit transmit timing of a second communication node is aligned with distribution unit transmit timing of a donor node, and the distribution unit receive timing of the second communication node is aligned with mobile terminal receive timing of the second communication node.

**4.** The method of claim 1, wherein the third timing mode comprises that:

the mobile terminal transmit timing of the first communication node is aligned with the distribution unit transmit timing of the first communication node; or

the distribution unit transmit timing of the first communication node is aligned with distribution unit transmit timing of a donor node, and the mobile terminal transmit timing of the first communication node is aligned with the distribution unit transmit timing of the first communication node.

**5.** The method of claim 2 or 3, wherein the mobile terminal transmit timing of the first communication node is determined according to one of the following signaling: time offset index invalid signaling, timing mode switching signaling, or uplink transmit timing switching signaling.

**6.** The method of claim 1, further comprising:

receiving a time offset index configured by a second communication node; and

determining the time offset according to the time offset index and time offset granularity.

**7.** The method of claim 6, wherein a manner of determining the time offset comprises that $N_{offset} = I_{offset} \cdot 16 \cdot 64/2^{\mu}$ ; wherein

$I_{offset}$ denotes the time offset index; and

$\mu$ denotes a sub-carrier spacing index.

**8.** The method of claim 5, wherein a bearing manner of signaling corresponding to the time offset index comprises one of the following: downlink control information, DCI, a physical downlink control channel, PDCCH, a medium access control-control element, MAC CE, radio resource control, RRC, signaling, or operations, administration and maintenance, OAM, signaling.

**9.** The method of claim 8, wherein the signaling comprises at least one of the following: a time offset index field, a timing advance group identifier field, or a value type field.

**10.** A time parameter determination method, being applied to a second communication node and comprising:

configuring a time offset index; and

sending the time offset index to a first communication node so that the first communication node determines a time offset according to the time offset index.

**11.** A communication device, comprising a communication module, a memory, and one or more processors; wherein

the communication module is configured to perform communication interaction between a first communication node, a second communication node, and a donor node;

the memory is configured to store one or more programs; and

when executed by the one or more processors, the one or more programs cause the one or more processors to perform the method of any one of claims 1 to 9 or 10.

12. A storage medium storing a computer program which, when executed by a processor, performs the method of any one of claims 1 to 9 or 10.

Parent DL Tx
Parent UL Rx
t1
IAB DL Rx
IAB UL Tx
IAB DL Tx
IAB UL Rx
t2
UE DL Rx
UE UL Tx

**FIG. 1**

2*Tdelta
Parent DL Tx
Parent UL Rx
t1
IAB DL Rx
IAB UL Tx
IAB DL Tx
IAB UL Rx
t2
UE DL Rx
UE UL Tx

**FIG. 2**

Parent DL Tx
Parent UL Rx

t1

IAB DL Rx
IAB UL Tx
IAB DL Tx
IAB UL Rx

t2

Child DL Rx
Child UL Tx
Child DL Tx
Child UL Rx

t3

UE DL Rx
UE UL Tx

**FIG. 3**

Parent DL Tx
Parent UL Rx

t1

IAB DL Rx
IAB UL Tx
IAB DL Tx
IAB UL Rx

t2

Child DL Rx
Child UL Tx
Child DL Tx
Child UL Rx

t3

UE DL Rx
UE UL Tx

**FIG. 4**

Receive a time offset index configured by a second communication node | S510

Determine the time offset according to the time offset index | S520

**FIG. 5**

Configure a time offset index | S610

Send the time offset index to a first communication node so that the first communication node determines the time offset according to the time offset index | S620

**FIG. 6**

| R | R | R | R | $I_{offset}$ | Octet 1 |
|---|---|---|---|---|---|
| $I_{offset}$ | | | | | Octet 2 |

**FIG. 7**

| Timing advance group identifier | R | R | $I_{offset}$ | | Octet 1 |
| $I_{offset}$ | | | | | Octet 2 |

**FIG. 8**

| Value type | R | R | R | $I_{offset}$ | | Octet 1 |
| $I_{offset}$ | | | | | | Octet 2 |

**FIG. 9**

| Value type | R | R | R | R | R | R | R | Octet 1 |
| R | R | $I_{offset}$ | | | | | | Octet 2 |

**FIG. 10**

| Value type | Timing advance group identifier | R | $I_{offset}$ | Octet 1 |
|---|---|---|---|---|
| $I_{offset}$ | | | | Octet 2 |

**FIG. 11**

Time parameter determination apparatus

1210

1220

| Receiver | First determination module |

**FIG. 12**

Time parameter determination apparatus

1310

1320

| Configuration module | Transmitter |

**FIG. 13**

1420            1430

| Memory | Communication module |
|---|---|

Processor

1410

**FIG. 14**

## INTERNATIONAL SEARCH REPORT

| International application No. |
| --- |
| **PCT/CN2022/119417** |

| | |
| --- | --- |
| **A.** | **CLASSIFICATION OF SUBJECT MATTER** |
| | H04W 56/00(2009.01)i |
| | According to International Patent Classification (IPC) or to both national classification and IPC |

| | |
| --- | --- |
| **B.** | **FIELDS SEARCHED** |

Minimum documentation searched (classification system followed by classification symbols)

H04W, H04L, H04Q

Documentation searched other than minimum documentation to the extent that such documents are included in the fields searched

Electronic data base consulted during the international search (name of data base and, where practicable, search terms used)

CNABS, CNTXT, ENTXTC, WPABS, 3GPP: 节点, 发射, 定时, 时间, 偏移, 提前量, 同步, 索引, node?, transmit+, tim+, offset, advance, synchronizat+, index

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| A | WO 2021031581 A1 (HUAWEI TECHNOLOGIES CO., LTD.) 25 February 2021 (2021-02-25)<br>description, page 6, 17th-to-last line to page 23, 7th-to-last line, and figures 1-8 | 1-9, 11, 12 |
| X | WO 2021088618 A1 (SHANGHAI LANGBO COMMUNICATION TECHNOLOGY CO., LTD.) 14 May 2021 (2021-05-14)<br>description, page 5, line 15 to page 10, line 22, and figures 1-3 | 10-12 |
| A | CN 110536406 A (ZTE CORP.) 03 December 2019 (2019-12-03)<br>entire document | 1-12 |
| A | WO 2021093207 A1 (ZTE CORP.) 20 May 2021 (2021-05-20)<br>entire document | 1-12 |

| ☐ Further documents are listed in the continuation of Box C. | ☑ See patent family annex. |
| --- | --- |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **19 October 2022** | **27 October 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/119417**

| Patent document cited in search report | | | Publication date (day/month/year) | Patent family member(s) | | | Publication date (day/month/year) |
|---|---|---|---|---|---|---|---|
| WO | 2021031581 | A1 | 25 February 2021 | EP | 4017151 | A1 | 22 June 2022 |
| | | | | WO | 2021031304 | A1 | 25 February 2021 |
| | | | | CN | 114223274 | A | 22 March 2022 |
| | | | | KR | 20220047603 | A | 18 April 2022 |
| | | | | US | 2022174636 | A1 | 02 June 2022 |
| | | | | BR | 112022002982 | A2 | 10 May 2022 |
| | | | | AU | 2020332948 | A1 | 17 March 2022 |
| WO | 2021088618 | A1 | 14 May 2021 | US | 2022264501 | A1 | 18 August 2022 |
| CN | 110536406 | A | 03 December 2019 | US | 2022039038 | A1 | 03 February 2022 |
| | | | | WO | 2020064027 | A2 | 02 April 2020 |
| WO | 2021093207 | A1 | 20 May 2021 | | None | | |

Form PCT/ISA/210 (patent family annex) (January 2015)